# EUROPEAN PATENT APPLICATION

(11) **EP 2 119 580 A1**
(43) Date of publication of application: **18.11.2009**
(21) Application number: 08425339.2
(22) Date of filing: 15.05.2008
(51) Int. Cl.: B60G 17/027, B60G 15/06, F16F 1/12

(54) **Shock absorber for vehicles, particularly for motorcycle-like vehicles and the like**

(71) Applicant: Paioli S.p.A., 40019 Sant 'Agata Bolognese (BO) (IT)
(72) Inventor: Pancaldi, Paolo, 40017 Crevalcore (Prov. of Bologna) (IT)
(74) Representative: Modiano, Micaela Nadia

(57) **Abstract**

A shock absorber (1) for vehicles, particularly for motorcycle-like vehicles and the like, comprising an axially acting elastic element (4) which is arranged on a cylinder (5) with a hydraulic piston (6) with a first end (7) which is coupled to the fixed casing (8) of the cylinder (5) and a second end (9) which is coupled to a portion (10) of the hydraulic piston (6). Means for adjusting the fixing position of the first end (7) are interposed between the first end (7) and the casing (8). The adjustment means comprise a bush (12), which is constituted by an annular disk (13) provided with an internal channel (14) which leads to its upper face with at least one respective opening (15), the internal channel (14) being coupled to a piston (16) for introducing fluid in the channel (14), and by an annular upper plate (17), on the outer front of which the first end (7) of the spring (4) rests, the plate (17) being arranged hermetically on the upper face. The plate (17) is provided with at least one respective stem (18), which can slide axially and hermetically along a corresponding opening (15) by way of the action of the internal pressure, determining a plurality of configurations of different mutual distance between the disk (13) and the plate (17).

## Description

The present invention relates to a shock absorber for vehicles, particularly for motorcycle-like vehicles and the like.

The shock absorber of vehicles is intended to dampen the oscillations of the suspensions, both during compression and during extension, which would otherwise affect the body and other mechanical parts of the vehicle, with a severe risk of failure. Without shock-absorbing, further, the wheels of the vehicle, when passing over for example a pothole, would leave the ground, with a considerable loss of grip and stability of the vehicle. The damping action occurs mostly during extension.

The telescopic shock absorber or fork with telescopic stems is one of the most widely used systems due to its simplicity of design and assembly, light weight and functionality.

This component is constituted by two coaxial tubes, which slide inside each other, and further comprises one or more springs and a shock-absorbing hydraulic stage.

The function of the spring is to dampen any stresses generated by the wheel of the motorcycle-like vehicle (or other vehicle) if it encounters humps or hollows in the road surface or in any case along the path followed by the wheel.

In order to make the trim of the vehicle more or less soft, various solutions are adopted which affect the initial load of the spring; the most basic systems are simple rings which act as contact surface for the spring: by screwing them along the shock absorber body, they modify the initial load of the spring (preloading), accordingly modifying the trim of the vehicle.

When the shock absorber is mounted on the vehicle, such rings are often scarcely accessible, and any adjustment becomes difficult and requires suitable equipment for intervention.

In order to make the adjustment of the initial load of the spring more accessible and precise, it is known to adopt a hydraulic device which uses the principle of communicating vessels and a suitable multiplication ratio: by means of a small screw, a pumping piston is pushed and in turn produces the outflow of a fluid (generally mineral oil) from a suitable reservoir to the chamber of the pusher piston (driven piston), which is generically annular: this is possible because this is a rigid and hermetic system.

The volumes comprised between the driving piston and the driven piston (pusher piston) cannot vary (the liquids are incompressible), and therefore when the driving piston moves so does the driven piston in proportion to their cross-section ratios.

The background art comprises spring preloading systems, which are generally defined according to two different configurations, i.e., with a pumping piston body integrated in a single component (i.e., comprised directly within the fork fitted with the shock absorber and/or in the shock absorber) or with a pumping piston body which is separate and connected to the driven piston by means of a flexible high-pressure hose.

The operation of these devices is relatively simple. By turning a knob, one acts on a respective actuation screw, which by screwing moves the pumping piston and forces the oil that lies in the chamber that faces it to flow out toward the chamber that determines the extent of the stroke of the shock absorber: the thrust of the oil in fact produces a displacement of the driven piston (pusher piston), which is forced to perform a translational motion to make room for such oil.

The constructive solutions for this application have some drawbacks. In particular, in the solution with the pumping piston body integrated in a single component, the pumping piston body occupies a considerable radial space, requiring during prototyping an accurate assessment of the spaces available on the vehicle.

Often the alternative solution is in any case forced to be adopted, manufacturing the pump body so that it is separated and connected with a flexible hose. Of course, even this solution is not free from drawbacks, since it is necessary to provide an accessible actuation region and an adequate anchoring; further, the component thus manufactured entails considerable assembly complexity.

The aim of the present invention is to provide a shock absorber for vehicles, particularly for motorcycle-like vehicles and the like, with spring preloading adjustment, which has small dimensions and a small space occupation.

Within this aim, an object of the present invention is to provide a shock absorber for vehicles, particularly for motorcycle-like vehicles and the like, which is simple to assemble and can be installed on any vehicle, motorcycle-like vehicle, even with limited spaces available.

Another object of the present invention is to provide a shock absorber for vehicles, particularly for motorcycle-like vehicles and the like, which is particularly compact and structurally solid.

Another object of the present invention is to provide a shock absorber for vehicles, particularly for motorcycle-like vehicles and the like, which has low costs, is relatively simple to provide in practice and is safe in application.

This aim and these and other objects, which will become better apparent hereinafter, are achieved by the present shock absorber for vehicles, particularly for motorcycle-like vehicles and the like, of the type which comprises an axially acting elastic element which is arranged on a hydraulic piston cylinder with a first end which is coupled to the fixed casing of the cylinder and a second end which is coupled to a portion of said piston, means for adjusting the fixing position of said first end being interposed between said first end and said casing, **characterized in that** said adjustment means comprise a bush, which is constituted by an annular disk provided with an internal channel which leads to its upper face with at least one respective opening, said channel being coupled to a piston for introducing fluid in said channel, and by an annular upper plate, on the outer front of which the first end of said spring rests, said plate being arranged hermetically on said upper face and being provided with at least one respective stem which can slide axially and hermetically along a corresponding opening by way of the action of the internal pressure, determining a plurality of configurations of different mutual distance between said disk and said plate.

Further characteristics and advantages of the invention will become better apparent and evident from the following detailed description of a preferred but not exclusive embodiment of a shock absorber for vehicles, particularly for motorcycle-like vehicles and the like, illustrated by way of non-limiting example in the accompanying drawings, wherein:

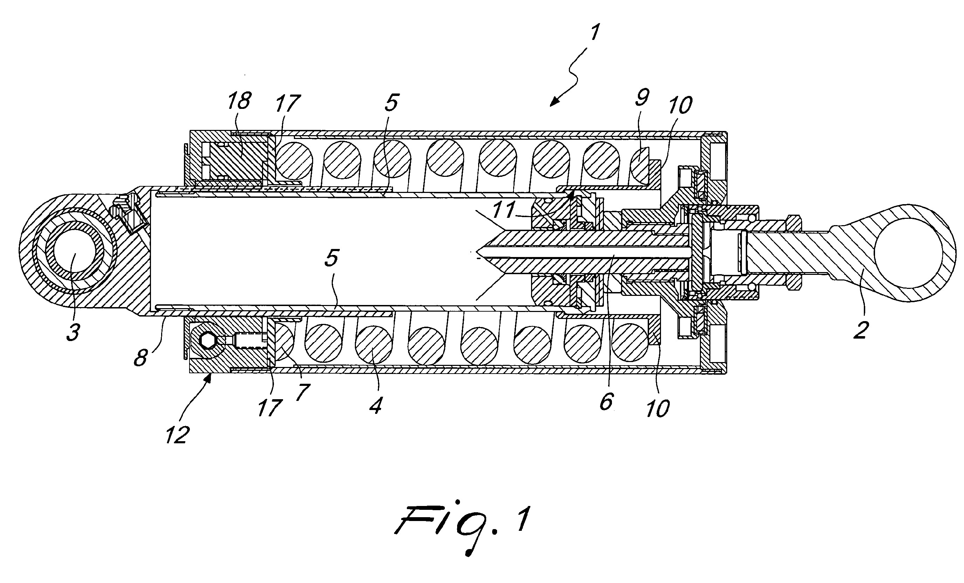

Figure 1 is a sectional side view, taken along a longitudinal plane, of a shock absorber for vehicles, particularly for motorcycle-like vehicles and the like, according to the invention, in a configuration that corresponds to the minimum preloading of the spring;

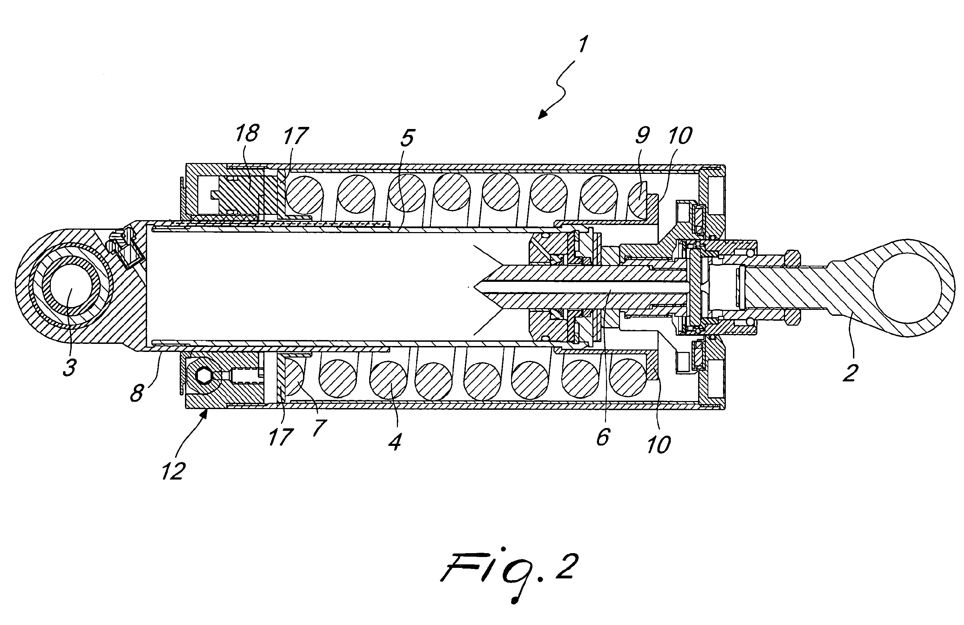

Figure 2 is a sectional side view, taken along a longitudinal plane, of a shock absorber for vehicles, particularly for motorcycle-like vehicles and the like, according to the invention, in a configuration that corresponds to the maximum preloading of the spring;

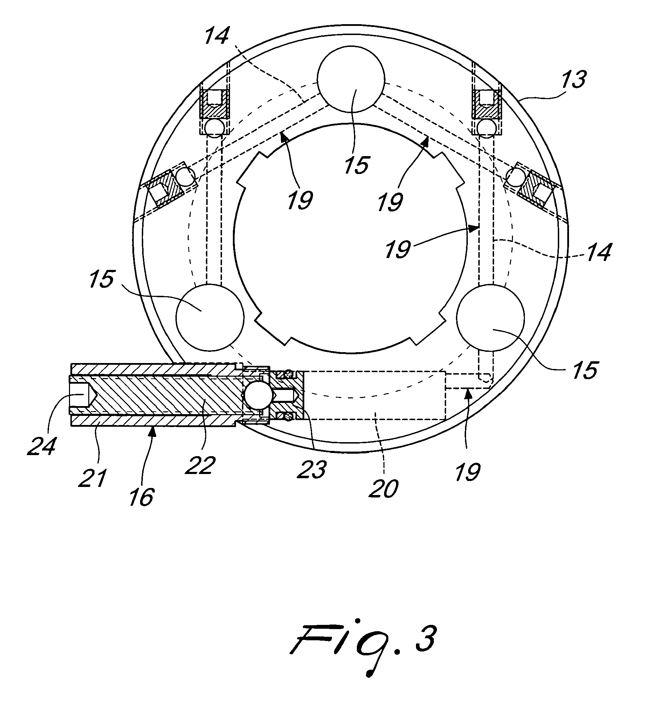

Figure 3 is a sectional side view, taken along a transverse plane, of a shock absorber for vehicles, particularly for motorcycle-like vehicles and the like, according to the invention, in a configuration that corresponds to the minimum preloading of the spring;

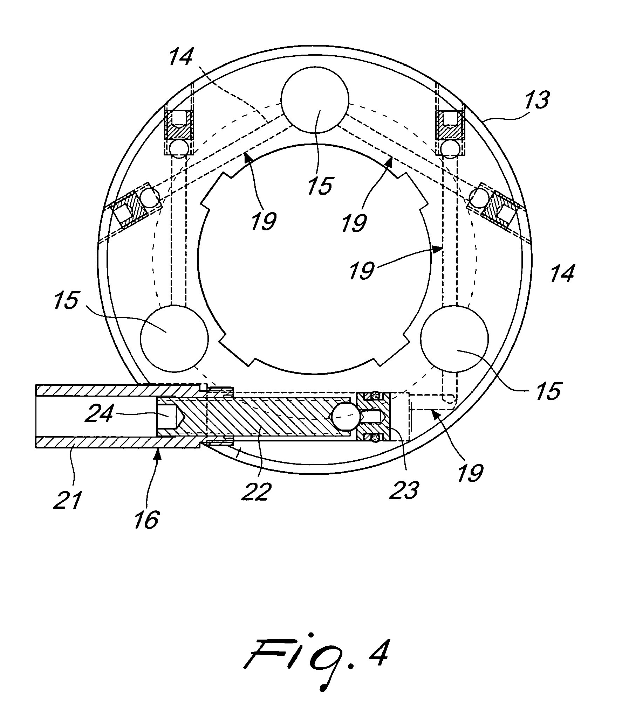

Figure 4 is a sectional side view, taken along a transverse plane, of a shock absorber for vehicles, particularly for motorcycle-like vehicles and the like, according to the invention, in a configuration that corresponds to the maximum preloading of the spring;

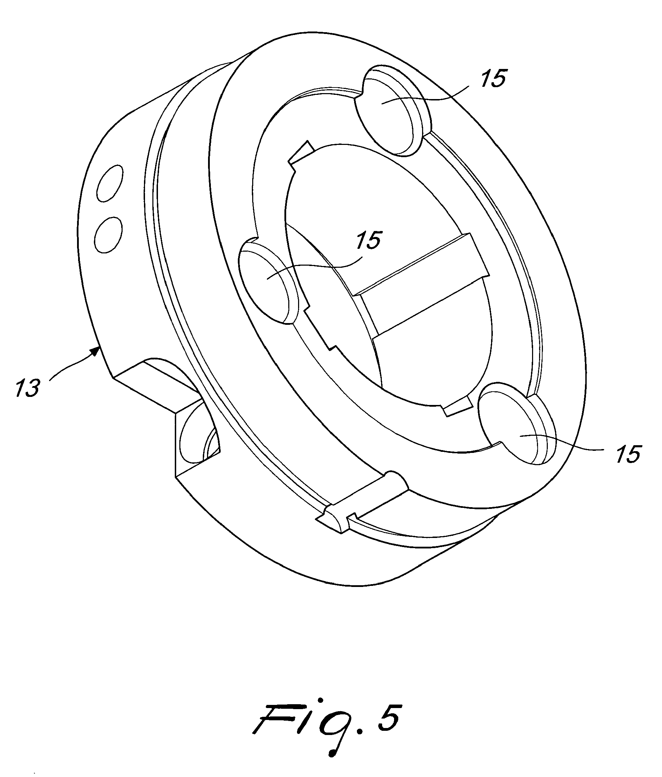

Figure 5 is a perspective view of an annular disk of a bush of a shock absorber for vehicles, particularly for motorcycle-like vehicles and the like.

With reference to the figures, the reference numeral 1 generally designates a shock absorber for vehicles, particularly for motorcycle-like vehicles and the like.

The shock absorber 1 is of the type adapted to be arranged between a fixed part of the vehicle (associated with a respective fixed seat 2) and a movable part, which is therefore coupled to the axis of the wheel or wheels, (associated with a respective movable seat 3).

The shock absorber 1 comprises an axially-acting elastic element 4 (in practice, an axially acting helical spring 4 generally made of metallic material, particularly steel), which is arranged on a cylinder 5 with a hydraulic piston 6.

The spring 4 has a first end 7 which is coupled to a fixed casing 8 of the cylinder 5 and a second end 9 which is coupled to a portion 10 of the hydraulic piston 6.

Actually, the portion 10, in the embodiment shown in the accompanying figures and in general in the constructive solutions of greater interest in practice and in application, is constituted by a sleeve which can slide along the cylinder 5 to a limiting position defined by a shoulder 11: the purpose of this embodiment, and in particular of the shoulder 11, is to prevent the spring 4 from extending further, entailing the escape of the sleeve from the cylinder 5. The generic description states that the end 9 of the spring 4 is coupled to the hydraulic piston 6, because the movement of the sleeve is actually damped ("braked") by the hydraulic piston 6 in order to ensure correct operation of the shock absorber 1.

Means for adjusting the fixing position of the first end 7 are interposed between the first end 7 and the casing 8.

In particular, according to the invention, the adjustment means comprise a bush 12, which is constituted by an annular disk 13 provided with an internal channel 14 which leads to its upper face with at least one respective opening 15.

The internal channel 14 is coupled to a piston 16 for introducing fluid therein: the fluid used is oil for hydraulic circuits, and in particular the use of specific mineral-based oils is known.

The bush 12 further comprises an annular upper plate 17, on the outer front of which the first end 7 of the spring 4 rests.

The plate 17 is arranged hermetically on the upper face of the bush 12 and is provided with at least one respective stem 18 which can slide axially and hermetically along the corresponding opening 15 by way of the action of the internal pressure. The sliding of the at least one stem 18 in the corresponding opening 15 determines a plurality of configurations of different mutual distance between the disk 13 and the plate 17. Each configuration is matched by a different position of the first end 7 of the spring 4 and therefore a different preloading thereof.

The openings 15 are arranged symmetrically with respect to the longitudinal axis of the shock absorber 1: each opening 15 hermetically and slidingly accommodates a respective stem 18 which is coupled to the upper plate 17.

According to an embodiment of particular interest in practice and in application, the openings 15 are three, arranged at 120° with respect to each other, and each one accommodates slidingly and hermetically a respective stem 18, which is jointly connected to the upper plate 17.

It is also possible to provide disks 13 in which there are four openings 15 mutually separated by 90°, five openings 15 separated by 72° with respect to each other, six openings 15 separated by 60° with respect to each other and, progressively, successive increments of symmetrically arranged openings 15.

The openings 15 shown in the figure have a circular cross-section (and so do the respective stems 18); it is also possible to provide openings with another shape, optionally shaped like slots with a circular configuration: in this case, the respective stems 18 must have a complementary shape.

The openings 15 are mutually connected by means of internal connecting channels 19; the connecting channels 19 are connected to a containment chamber 20 for the fluid which is arranged downstream of the piston 16. It should be noted that in a particular embodiment shown in the accompanying figures, the internal connecting channels 19 are open outward (this opening is intended to simplify the operations for manufacturing the bush 12). Each individual opening is then closed outward (in operating conditions) by a respective plug. In the figures, the plug is provided with a threaded element which is engaged on the outside of such opening and is surmounted by a ball for blocking a port for connection between the connecting channel 19 and such opening.

The piston 16 comprises a hollow tubular element 21 which leads to the internal channel 14 and accommodates a rod 22, whose end 23 arranged inside the tubular element 21 can slide hermetically therein.

An outer end 24 of the rod 22 is provided with a unit for adjusting its position with respect to the tubular element 21. In particular, the adjustment unit is a threaded stem (constituted in the figure by the rod 22 itself).

The internal cavity of the tubular element 21 is provided with a corresponding thread which is complementary to the thread of the stem for mutual meshing: an axial rotation of the stem therefore produces a translational motion of the rod 22 and therefore of its internal end 23, which can slide hermetically in the tubular element 21.

In the embodiment shown in the figures, the tubular element 21 faces the containment chamber 20, which has the same diameter. The chamber 20, being provided on the bush 12 (in particular in the disk 13), must ensure continuity with the tubular element 21 to ensure the hermetic stroke of the internal end 23, with continuity also in passing from one to the other. Attention is called to the constructive preference to produce a piston 16 in which the entire stroke of the internal end 23 is provided in the chamber 20.

The translational motion of the internal end 23 from a first configuration of minimum interference with the containment chamber 20 to a second configuration for maximum interference with the chamber 20 produces an increase in the level of fluid in the openings 15, with consequent lifting of the stems 18. This produces the movement of the outer front of the annular upper plate 17 and the axial compression of the spring 4.

By way of the adjustment of the outer end 24 of the piston 16 it is therefore possible to vary with continuity the preloading of the spring 4, yet having available a shock absorber 1 of extremely compact size.

It has thus been shown that the invention achieves the proposed aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A shock absorber (1) for vehicles, particularly for motorcycle-like vehicles and the like, of the type which comprises an axially acting elastic element (4) which is arranged on a cylinder (5) with a hydraulic piston (6) with a first end (7) which is coupled to the fixed casing (8) of the cylinder (5) and a second end (9) which is coupled to a portion (10) of said hydraulic piston (6), means for adjusting the fixing position of said first end (7) being interposed between said first end (7) and said casing (8), **characterized in that** said adjustment means comprise a bush (12), which is constituted by an annular disk (13) provided with an internal channel (14) which leads to its upper face with at least one respective opening (15), said internal channel (14) being coupled to a piston (16) for introducing fluid in said channel (14), and by an annular upper plate (17), on the outer front of which the first end (7) of said spring (4) rests, said plate (17) being arranged hermetically on said upper face and being provided with at least one respective stem (18) which can slide axially and hermetically along a corresponding opening (15) by way of the action of the internal pressure, determining a plurality of configurations of different mutual distance between said disk (13) and said plate (17).

2. The shock absorber according to claim 1, **characterized in that** said openings (15) are arranged symmetrically with respect to the longitudinal axis of said shock absorber (1), each one of said openings (15) accommodating slidingly and hermetically a respective stem (18) which is coupled to said annular upper plate (17), on the outer front of which the first end (7) of said spring (4) rests.

3. The shock absorber according to the preceding claim, **characterized in that** said openings (15) are three, arranged at 120° to each other, each opening accommodating slidingly and hermetically a respective stem (18), which is coupled to said annular upper plate (17), on the outer front of which the first end (7) of said spring (4) rests.

4. The shock absorber according to one or more of the preceding claims, **characterized in that** said openings (15) are mutually connected by means of internal connecting channels (19), which are connected to a chamber (20) for containing said fluid which is arranged downstream of said piston (16).

5. The shock absorber according to claim 1, **characterized in that** said piston (16) comprises a hollow tubular element (21) which leads to said internal channel (14) and accommodates a rod (22), whose end (23) arranged inside the tubular element (21) is able to slide hermetically therein.

6. The shock absorber according to the preceding claim, **characterized in that** the outer end (24) of said rod (22) is provided with a unit for adjusting its position with respect to said tubular element (21).

7. The shock absorber according to the preceding claim, **characterized in that** said adjustment unit is a threaded stem, the internal cavity of said tubular element (21) being provided with a corresponding thread which is complementary to the thread of said stem for mutual meshing, an axial rotation of the stem producing a translational motion of said rod (22) and therefore of its internal end (23) which can slide hermetically in the tubular element (21).

8. The shock absorber according to one or more of the preceding claims, **characterized in that** said tubular element (21) faces a containment chamber (20) which has the same diameter and is provided on said bush (12) and said internal end (23) can slide, continuously and hermetically, within the tubular element (21) and within said containment chamber (20).

9. The shock absorber according to one or more of the preceding claims, **characterized in that** the translational motion of said internal end (23) from a first configuration for minimum interference with said containment chamber (20) to a second configuration for maximum interference with said containment chamber (20) produces an increase in the level of fluid in said openings (15), with a consequent rise of the stems (18), movement of the outer front of said annular upper plate (17), and axial compression of said spring (4).
